# EUROPEAN PATENT APPLICATION

(11) **EP 4 442 104 A1**
(43) Date of publication of application: **09.10.2024**
(21) Application number: 23166415.2
(22) Date of filing: 03.04.2023
(51) Int. Cl.: A01D 75/18, A01F 12/28

(54) **POSITIONING APPARATUS FOR A ROTARY COMBINE HARVESTER**

(71) Applicant: CNH Industrial Belgium N.V., 8210 Zedelgem (BE)
(72) Inventor: VAN OVERSCHELDE, Pieter, 8210 Zedelgem (BE); TALLIR, Frederik, 8210 Zedelgem (BE); MISSOTTEN, Bart, 8210 Zedelgem (BE); JONGMANS, Dré, 8210 Zedelgem (BE); AESAERT, Glenn, 8210 Zedelgem (BE); VAN DER HAEGEN, Johan, 8210 Zedelgem (BE); VAN HULLEBUSCH, Bart, 8210 Zedelgem (BE)
(74) Representative: CNH Industrial IP Department

(57) **Abstract**

The invention provides a positioning apparatus (17) for a rotary combine harvester (100) having a threshing concave (6a) and a separation grate (6b). The apparatus (17) has a concave adjustor mechanism for adjusting a threshing gap between the threshing concave (6a) and a rotor or rotors (5) of the harvester (100). The concave adjustor mechanism has a concave actuator (33) including a concave hydraulic cylinder having an adjustable hydraulic pressure to cause rotation of a concave control arm (31) so as to control a position of the threshing concave (6a). The apparatus (17) also has a grate adjustor mechanism for adjusting a separation gap between the separation grate (6b) and the rotor or rotors (5) of the harvester (100). The grate actuator mechanism has a grate actuator (330) including a grate hydraulic cylinder having an adjustable hydraulic pressure to cause rotation of the grate control arm (310) so as to control a position of the separation grate (6b). The concave hydraulic cylinder and the grate hydraulic cylinder both extend in a longitudinal direction (X) of the apparatus (17). Advantageously, the threshing and separation gaps may be adjusted independently and relatively quickly. Also advantageously, the invention provides a compact, space-saving layout for the apparatus (17).

## Description

### TECHNICAL FIELD

The present invention relates to a positioning apparatus for a rotary combine harvester. Aspects of the invention relate to a positioning apparatus and to a rotary combine harvester.

### BACKGROUND OF THE INVENTION

Combine harvesters harvest grain from the field and separate the grain kernels from all the other material in the harvested crop. This other material is commonly named 'material other than grain' or MOG and comprises, e.g., straw, leaves, ears and chaff. This separation involves different process stages. In a threshing step, the grain kernels are separated from the chaff and the plant. A consecutive separation step separates the straw and other larger parts in the grain-MOG mixture from the smaller grain kernels and the chaff. Then, a cleaning stage, typically comprising a blower for blowing away the lightweight chaff and a set of reciprocating sieves for letting through the heavier grain kernels, separates the grains from the chaff.

Threshing and separation stages come in different mechanical setups. In rotary combines one or more rotors are provided in a longitudinal direction of the combine harvester, i.e. parallel to the direction of travel. The first part of the rotor is used for threshing, a second part for separation. Although it should be clear that there is no sharp distinction between the threshing and the separation process (some separation will occur close to the front of the rotor and there may also be some threshing in the rear), the rotor is divided into a threshing section and a separation section. Underneath the threshing section, a threshing concave is provided at a short distance (the threshing gap) from the rotor. Similarly, a separation grate extends under and about a second part of the rotor, leaving a separation gap in between. Threshing and separation elements on the rotor cooperate with the threshing concave and separation grate to separate the grain from the plant.

An example of a rotary combine is disclosed in EP3023001. This document shows a single rotor with a suspended concave. At one side the concave is supported by a hinge. At the opposite side, the concave is coupled to the chassis via two hydraulic actuators. The concave control system uses a force sensor to measure a force applied by the rotor and the concave to a crop mat disposed in the gap between the rotor and the concave. A position sensor is used for measuring the gap size. A control unit controls the actuators in such a way that the force signal and position signal follow a predetermined relation defined by a set of predetermined economic operating curves. This control system allows the actuator to dynamically adapt the concave gap to the varying amount of crop that is inserted between the rotor and the concave. When processing larger amounts of crop, the gap is widened to, e.g., reduce the risk of rotor blockage and broken grain kernels. When there is less crop material inserted into the gap, the gap may be narrowed to reduce the amount of unthreshed ears. However, also with the concave control system disclosed in EP3023001, rotor blockage, unthreshed ears and broken grain kernels do still occur.

EP3178309 describes a reset apparatus for use in a combine harvester for controlling the position of a threshing concave relative to a threshing rotor, i.e. controlling a threshing gap. The reset apparatus acts to maintain the position of the concave relative to the rotor until the concave is subjected to a force above a given threshold limit by crop being processed by the combine, at which point the apparatus releases the concave so that the threshing gap assumes a maximum possible value. The apparatus may subsequently be reset so that the apparatus once again controls the position of the concave relative to a rotor.

It is an aim of the present invention to address one or more problems associated with the prior art.

### SUMMARY OF THE INVENTION

According to an aspect of the present invention there is provided a positioning apparatus for a rotary combine harvester having a threshing concave and a separation grate. The positioning apparatus comprises an elongate member defining a longitudinal direction of the positioning apparatus, a concave adjustor and a grate adjustor.

The concave adjustor may comprise a concave movable plate attachable to the threshing concave and being movable in a vertical direction perpendicular to the longitudinal position, and a concave control arm mounted on the elongate member and being pivotable relative to the elongate member about a pivot axis perpendicular to the longitudinal direction and the vertical direction. Rotation of the concave control arm may cause movement of the concave movable plate. The concave adjustor may also comprise a concave control rod coupling the concave movable plate and the concave control arm. The concave adjustor may also comprise a concave actuator including a concave hydraulic cylinder having an adjustable hydraulic pressure to cause rotation of the concave control arm so as to control a position of the threshing concave.

The grate adjustor may comprise a grate movable plate attachable to the separation grate and being movable in a vertical direction perpendicular to the longitudinal direction, and a grate control arm mounted on the elongate member and being pivotable relative to the elongate member about a pivot axis perpendicular to the longitudinal direction and the vertical direction. Rotation of the grate control arm may cause movement of the grate movable plate. The grate adjustor may also comprise a grate control rod coupling the grate movable plate and the grate control arm. The grate adjustor may also comprise a grate actuator including a grate hydraulic cylinder having an adjustable hydraulic pressure to cause rotation of the grate control arm so as to control a position of the separation grate.

The concave hydraulic cylinder and the grate hydraulic cylinder may both extend in the longitudinal direction.

The described positioning apparatus is advantageous in that the positioning apparatus may be used to independently adjust the position of the threshing concave and the separation grate with respect to a rotor or rotors of the rotary combine. That is, the threshing gap and the separation gap may be set independent from each other, and this provides a more flexible arrangement to optimise the threshing and separation operation of the rotary combine.

The pressure in the hydraulic cylinders may be independently adjusted so as to set the position of the concave and grate movable plates (and therefore the position of the threshing concave and separation grate, respectively) relative to the elongate member. Prior arrangements include an electric motor as an adjustment mechanism; however, the use of hydraulic cylinders results in a positional apparatus that may be adjusted more quickly, i.e. it is more reactive. In addition, the present hydraulic arrangement results in a highly durable apparatus.

The described positioning apparatus is also advantageous in that it provides a space-saving layout that the apparatus to fit into the limited available space in a rotary combine harvester. In particular, a rotary combine harvester has space constraints not only above the rotor(s) where the grain bin is located, but also to the rear of the rotor(s) where structural parts, or further components such as a residue management component, may be located.

The concave hydraulic cylinder and the grate hydraulic cylinder may both extend in a substantially common vertical plane of the positioning apparatus. This helps to reduce the overall width of the positional apparatus so as to make it more compact.

The concave hydraulic cylinder may be positioned above the grate hydraulic cylinder in the vertical direction, or vice versa. This further helps to minimise the space used by the positional apparatus, particularly minimising the width of the apparatus.

The concave control rod may be adjacent to the grate control rod. By arranging the concave and grate control rods in this way the length of the positional apparatus in the longitudinal direction may be reduced.

The concave control rod and the grate control rod may extend in a substantially common horizontal plane of the positioning apparatus. The concave control rod may extend substantially parallel to the grate control rod in the longitudinal direction. Such features assist in ensuring that the positional apparatus is compact, reducing the overall volume it takes up.

The concave actuator may be configured to cause rotation of the concave control arm against a concave biasing force, and the grate actuator may be configured to cause rotation of the grate control arm against a grate biasing force.

The concave adjustor may comprise a concave spring and the grate adjustor may comprise a grate spring. The concave spring may provide the concave biasing force against the concave actuator, and the grate spring may provide the grate biasing force against the grate actuator.

According to another aspect of the present invention there is provided a rotary combine harvester comprising first and second rotors, and first and second threshing concaves extending under and about at least part of a threshing portion of the respective first and second rotors and defining a threshing gap therebetween. The combine comprises first and second separation grates extending under and about at least part of a separation portion of the respective first and second rotors and defining a separation gap therebetween. The combine may comprise a positioning apparatus as described above.

The positioning apparatus may be arranged centrally relative to the first and second rotors. By arranging the positioning apparatus between the first and second rotors, a compact layout is achieved which reduces the space used by the positioning apparatus. This is particularly beneficial as the positional apparatus has the functionality of adapting independently each of the threshing gap and the separation gap, i.e. the positional apparatus is designed so that there are two adjustment mechanisms provided in the limited available space. Having this dual functionality in being provided by a compact apparatus using minimum space is important as the available space in a twin-rotor combine between the rotors and a grain bin of the combine may be very limited. In particular, the layout of the positional apparatus may be as described above so that the apparatus itself is relatively narrow such that it conveniently fits in the narrow available space of a twin-rotor layout.

The positioning apparatus may be arranged above the first and second rotors in the vertical direction. This is a particularly convenient way to arrange the positioning apparatus from a space-saving standpoint.

The first and second threshing concaves may each comprise a fixed outer concave edge at an outer side of the respective first and second rotors, and a movable inner concave edge at an inner side of the respective first and second rotors. Actuation of the concave actuator may cause movement of the movable inner concave edges so as to adjust the threshing gap.

The first and second separation grates may each comprise a fixed outer grate edge at an outer side of the respective first and second rotors, and a movable inner grate edge at an inner side of the respective first and second rotors. Actuation of the grate actuator may cause movement of the movable inner grate edges so as to adjust the separation gap.

It may be beneficial to have the fixed hinge joints or edges at the outer sides of the rotors for crop transition from concaves or grates to rotor covers as the crop is released instead of meeting obstructions. The movable joints or edges at the inner side of the rotors may be attached to movable plates of the positioning apparatus by clamps, and so conveniently the inner edges or joints of the threshing concaves or separation grates for both of the rotors may be adjusted by a single positioning apparatus.

The concave actuator and the grate actuator may each comprise a hydraulic cylinder. The concave actuator and the grate actuator may each comprise pressure control means configured to control the hydraulic pressure in the respective hydraulic cylinders. The pressure control means may be configured to set the hydraulic pressure in the respective hydraulic cylinders to a predetermined value so as to adjust the threshing and separation gaps to desired values.

The pressure control means may be configured to adaptively control the pressure in the hydraulic cylinders to return to the respective predetermined values so as to maintain the threshing and separation gaps at the desired values. Advantageously, the threshing concaves and/or separation grates are allowed to open, i.e. to increase the threshing gap and/or separation gap, if the pressure applied to the concaves and/or grates by crop being processed by the rotors increases, before returning to the pre-set threshing and/or separation gaps when the applied pressure drops. That is, the hydraulic control means may be configured to keep the pressure in the hydraulic cylinders quasi-constant. This leads to a more reactive suspension which in turn helps the combine to process continuously changing amounts of crop more efficiently. Furthermore, allowing the concaves and/or grates to adaptively adjust in this way may be beneficial on cleaning shoe and rotor losses, and hence may result in increased energy efficiency of the combine.

The threshing concaves and the separation grates may be configured to move relative to the first and second rotors to increase the respective threshing and separation gaps upon increased pressure being applied to the threshing concaves and separation grates by causing a change in the pressure in the hydraulic cylinders.

According to another aspect of the present invention there is provided a rotary combine harvester comprising first and second rotors, and first and second threshing concaves extending under and about at least part of a threshing portion of the respective first and second rotors and defining a threshing gap therebetween. The combine comprises first and second separation grates extending under and about at least part of a separation portion of the respective first and second rotors and defining a separation gap therebetween. The combine may comprise a positioning apparatus comprising a concave actuator and a grate actuator for respectively adjusting the threshing gap and the separation gap. The positioning apparatus may be arranged centrally relative to the first and second rotors.

The positioning apparatus may be arranged above the first and second rotors in a vertical direction of the rotary combine harvester.

The first and second threshing concaves may each comprise a fixed outer concave edge at an outer side of the respective first and second rotors, and a movable inner concave edge at an inner side of the respective first and second rotors. Actuation of the concave actuator may cause movement of the movable inner concave edges so as to adjust the threshing gap.

The first and second separation grates may each comprise a fixed outer grate edge at an outer side of the respective first and second rotors, and a movable inner grate edge at an inner side of the respective first and second rotors. Actuation of the grate actuator may cause movement of the movable inner grate edges so as to adjust the separation gap.

The positioning apparatus may comprise concave movable plate attached to the first and second threshing concaves. Actuation of the concave actuator against a concave biasing force may cause movement of the concave movable plate so as to adjust the threshing gap. The positioning apparatus may also comprise a grate movable plate attached to the first and second separation grates. Actuation of the grate actuator against a grate biasing force may cause movement of the grate movable plate so as to adjust the separation gap.

The positioning apparatus may comprise a concave spring which provides the concave biasing force against the concave actuator. The positioning apparatus may comprise a grate spring which provides the grate biasing force against the grate actuator.

The concave actuator and the grate actuator may each comprise a hydraulic cylinder.

The concave actuator and the grate actuator may each comprise pressure control means configured to control the hydraulic pressure in the respective hydraulic cylinders. The pressure control means may be an accumulator. The pressure control means may be a constant pressure valve.

The pressure control means may be configured to set the hydraulic pressure in the respective hydraulic cylinders to a predetermined value so as to adjust the threshing and separation gaps to desired values.

The threshing concaves and the separation grates may be configured to move relative to the first and second rotors to increase the respective threshing and separation gaps upon increased pressure being applied to the threshing concaves and separation grates by causing a change in the pressure in the hydraulic cylinders. The pressure control means may be configured to adaptively control the pressure in the hydraulic cylinders to return to the respective predetermined values so as to maintain the threshing and separation gaps at the desired values.

The suspension of the threshing concaves and/or separation grates may be adaptively controlled by hydraulic pressure control means as described above, while the initial positioning of the threshing concaves and/or separation grates to set the threshing and/or separation gaps may be controlled by an electric motor, as it may not be so crucial for the positional aspect of the apparatus to have the quicker reactive qualities of hydraulic control.

### BRIEF DESCRIPTION OF THE DRAWINGS

One or more embodiments of the invention will now be described, by way of example only, with reference to the accompanying drawings, in which:
Figure 1 is a schematic side view of an axial flow combine harvester, showing the position of the rotors, threshing concaves and separation grates;
Figure 2 is a schematic end view of a positional apparatus according to an aspect of the present invention, together with the rotors and threshing concaves of Figure 1, the positional apparatus being for adjusting the position of the threshing concaves relative to the rotors;
Figures 3a and 3b show perspective views of the positional apparatus of Figure 2;
Figure 4 shows a schematic side view of the positional apparatus of Figure 2;
Figure 5 shows an end view of the rotors and the positioning apparatus of Figure 2;
Figure 6 shows a perspective view of the threshing concaves and separation grates of Figure 1 and the positioning apparatus of Figure 2; and,
Figure 7 shows a cross-sectional side view of the threshing concaves and separation grates of Figure 1 and the positional apparatus of Figure 2.

### DETAILED DESCRIPTION OF THE DRAWINGS

The present invention provides positional apparatus for a rotary combine harvester having both threshing concaves and separation grates located under rotors of the combine. In particular, the positional apparatus allows the positions of the threshing concaves and separation grates relative to the rotors to be set independent of each other. Furthermore, the positional apparatus allows the relative positions of the concaves and grates to adaptively adjust in dependence on a pressure applied thereto by crop that is being processed by the combine.

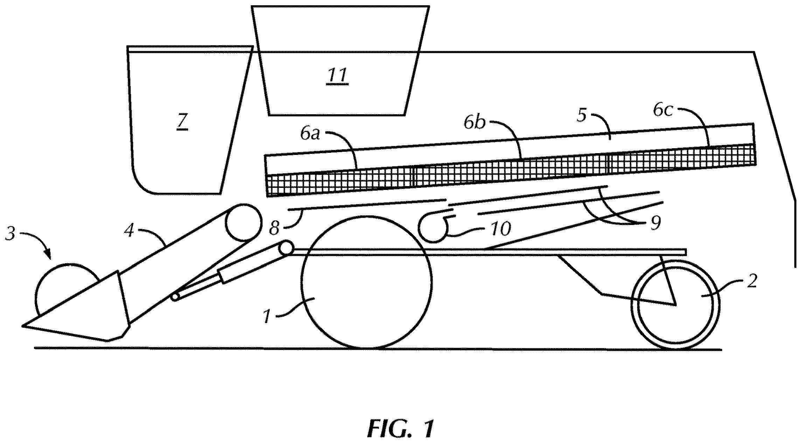

Figure 1 shows the main components of an axial flow combine harvester 100, mounted on front and rear wheels 1, 2. Crops are cut from the field by the header assembly 3, and supplied by the feeder 4 to a twin set of rotors 5, arranged along a longitudinal axis of the harvester and tilted slightly upwards with respect to the horizontal. The rotors 5 are rotatably mounted with respect to threshing concaves 6a and separation grates 6b. In the present embodiment, the pair of rotors 5 includes one pair of threshing concaves 6a and one pair of separation grates 6b; however, any suitable number of pairs of threshing concaves and separation grates may be mounted along the length of the rotors.

The combine 100 includes a driver's cabin 7, as well as a cleaning arrangement comprising a grain pan 8, a set of sieves 9 and a blower 10 for blowing light residue material towards the back of the combine. Grains fall through the sieves and are transported by an assembly of augers and a grain elevator (not shown) to a grain tank 11.

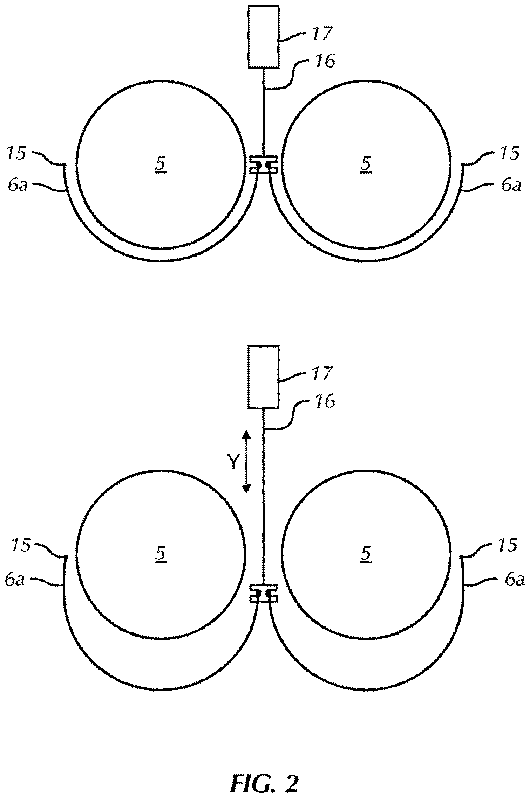

As schematically illustrated in Figure 2, for the twin-rotor arrangement of the described embodiment adjustment of the pair of concaves 6a is achieved by pivoting the concaves about their outer edges 15. In the area between the rotors 5, the inner edges of the concaves are suspended from a concave movable plate or divider 16, which is movable upwards or downwards along a vertical axis or direction Y as indicated by the arrows in Figure 2. The concave movable plate 16 is part of a positioning apparatus 17, which controls movement of the concave movable plate 16. The positioning apparatus 17 is arranged above the rotors 5 centrally between them.

Note that adjustment of the separation grates 6b is achieved in a similar manner. In particular, the positioning apparatus 17 also includes, and controls movement of, a grate movable plate or divider (not shown in Figure 2) which causes adjustment of the separation grates 6b by pivoting them about their outer edge.

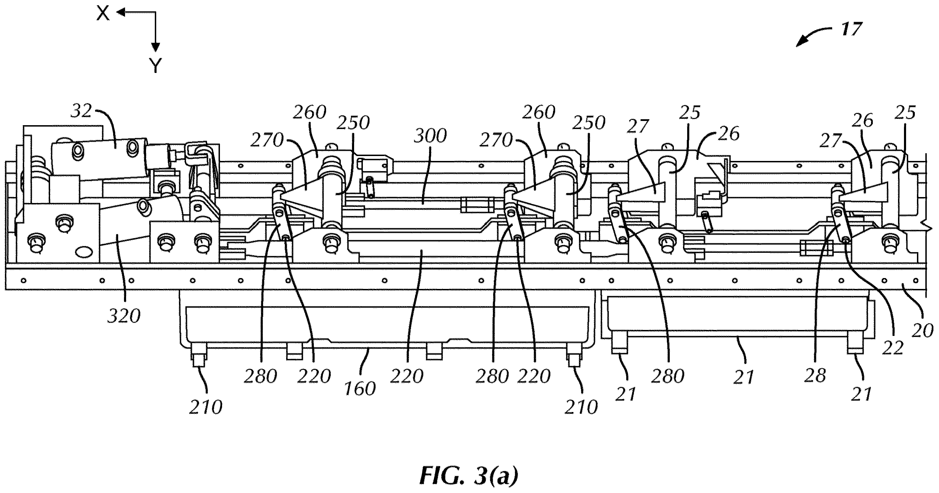

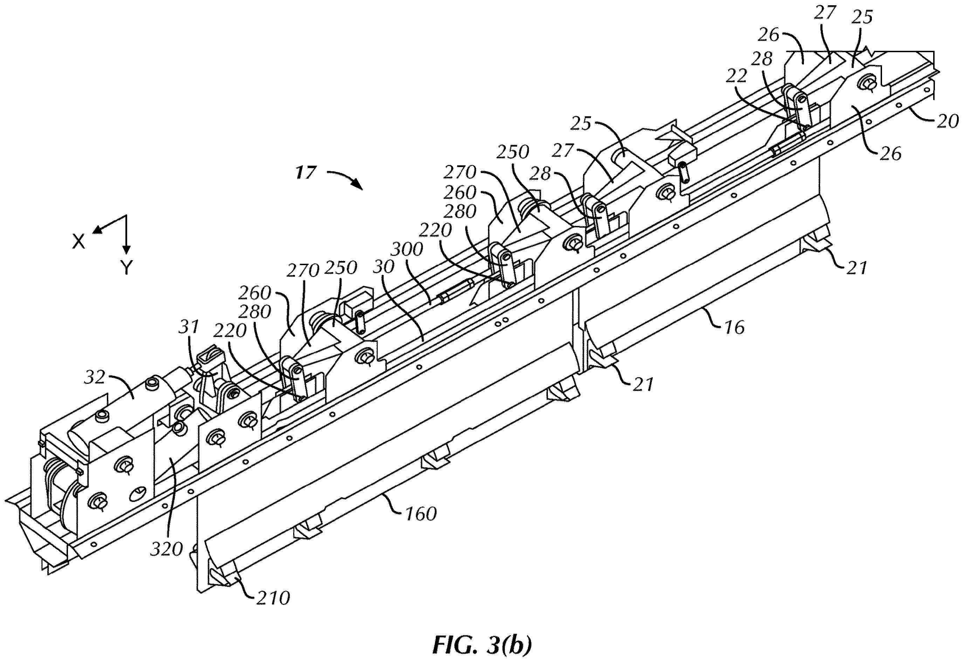

Figures 3a and 3b show perspective views of the positioning apparatus 17. The apparatus 17 comprises an elongate gutter-shaped structure or member 20 which may be mounted to the chassis of the combine 100 such that it is fixed relative to the rotors 5. The elongate member 20 defines a longitudinal direction or axis X of positioning apparatus 17. The longitudinal direction X is perpendicular the vertical axis Y. As already shown in Figure 2, the positioning apparatus 17 includes a concave movable plate 16 extending downwards from the elongate member 20, the concave movable plate 16 being attachable to the threshing concaves 6a and being movable relative to the elongate member 20. In particular, the elongate member 20 defines a longitudinal axis of the positioning apparatus 17 (and extends along a longitudinal axis of the combine), and the concave movable plate 16 is movable in a direction perpendicular to the longitudinal axis. At its lower end, the concave movable plate 16 is provided with recesses 21 where the inner edges of the threshing concaves 6a are to be slidably mounted thereon.

The concave movable plate 16 is itself suspended in two attachment points 22, from a pair of pivoting structures, each of the latter being provided with a rotatable axle 25 mounted between two fixed brackets 26. The axles 25 each have a first radially-oriented arm 27 connected to the attachment point 22 of the concave movable plate 16 via pivotable links 28. The axles 25 also each have a second radial arm pivotably connected to a concave control rod 30 extending along the length of the elongate member 20.

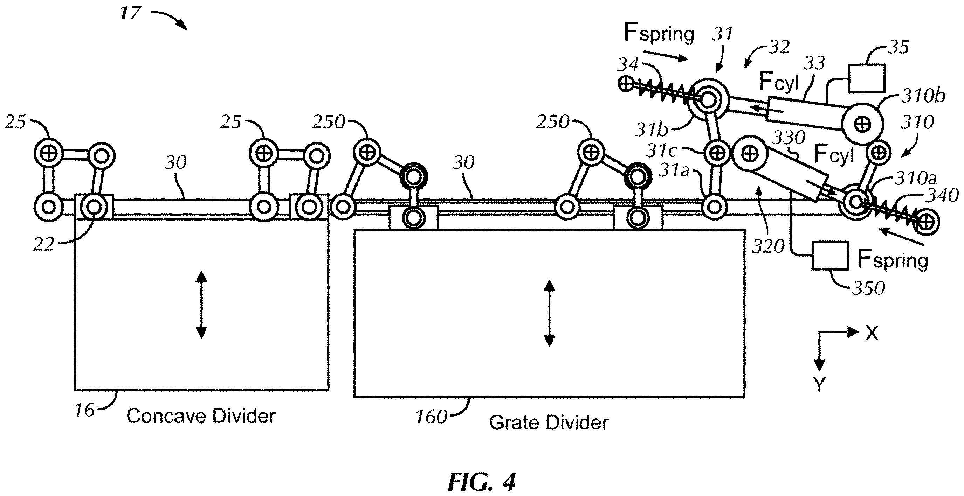

With additional reference to Figure 4, which shows a schematic side view of the positional apparatus 17, the other end of the concave control rod 30 is attached or coupled to a concave control arm 31. In particular, the concave control arm 31 is attached to the concave control rod 30 at a first end 31a of the arm 31. At a second end 31b of the arm 31 opposite the first end 31a is attached a concave actuating mechanism 32. The concave control arm 31 is rotatable about a pivot point 31c between the first and second ends 31a, 31b. The pivot axis of the pivot point 31c is perpendicular to the longitudinal axis of the positioning apparatus 17, i.e. perpendicular to the axis along which the elongate member 20 extends. The concave actuating mechanism 32 includes a concave actuator 33. In the described embodiment, the concave actuator 33 is a hydraulic cylinder (containing hydraulic fluid) with an associated actuating piston which moves in dependence on the hydraulic pressure. That is, the pressure in the hydraulic cylinder dictates the level of force that the concave actuator 33 applies to the concave control arm 31.

With continuing reference to Figure 4, there is also attached to the second end 31b of the concave control arm 31 a concave compression spring 34, which provides a biasing force against the actuating mechanism 32, i.e. in the opposite direction to the force applied by the actuating rod of the concave actuator 33 to the control arm 31. The concave spring 34 may be considered to act in the same direction as gravity and crops applying pressure to the concaves 6a. When the spring biasing force completely overcomes the force applied on the control arm 31 by the actuating mechanism 32 then the control arm 31 pivots about its pivot axis 31c. As viewed in Figure 4, this causes the concave control rod 30 to move to the left which in turn causes the concave axles 25 to rotate. The attachment points 22 therefore move downwards which in turn causes the concave movable plate 16 to move downwards. When attached to the threshing concaves 6a, this means that the concaves 6a move downwards to increase the threshing gap between the concaves 6a and rotors 5 to attain the maximum possible value.

In contrast, when the force applied on the control arm 31 by the actuating mechanism 32 completely overcomes the biasing force of the concave spring 34 then the control arm 31 pivots such that the control rod 30 moves to the right. In turn, this causes the concave axles 25 to rotate such that concave movable plate 16 moves upwards. When attached to the threshing concaves 6a, this means that the concaves 6a move upwards to decrease the threshing gap to be the minimum possible value.

Therefore, it will be understood that the pressure in the hydraulic cylinder 33 dictates the size of the threshing gap in the combine. In particular, the hydraulic cylinder pressure is controlled by pressure control means 35. In the described embodiment the pressure control means is in the form of an accumulator.

When the pressure control means 35 controls the pressure in the hydraulic cylinder 33 to be a relatively low value, the actuating rod of the concave actuator is in a retracted position. As the pressure in the hydraulic cylinder 33 is increased, the actuating rod extends from the hydraulic cylinder 33 to increase the force it applies to the control arm 31 in opposition to the biasing force of the spring 34. This causes the control arm to rotate about the pivot axis 31c (in an anticlockwise direction as viewed in Figure 4). In turn, this causes the control rod 30 to the right, or in the positive X direction, as viewed in Figure 4. This causes the rotatable axles or linkages 25 to rotate about their axes (again anticlockwise as viewed in Figure 4) and to move the first radially-oriented arms 27 and the pivotable links 28 generally upwards. In turn, this causes the concave divider 16 to move upwards in the vertical or Y direction as viewed in Figure 4, which causes the concaves 6a to move upwards so as to reduce the threshing gap (see Figure 2).

Returning to Figures 3a and 3b, the positioning apparatus 17 also includes a grate movable plate 160 extending downwards from the elongate member 20, the grate movable plate 160 being attachable to the separation grates 6b and being movable relative to the elongate member 20. In particular, the grate movable plate 160 is movable in a direction perpendicular to the longitudinal axis of the positioning apparatus 17. At its lower end, the grate movable plate 160 is provided with recesses 210 where the inner edges of the separation grates 6b are to be slidably mounted thereon.

The grate movable plate 160 is itself suspended in two attachment points 220, from a pair of pivoting structures, each of the latter being provided with a rotatable axle 250 mounted between two fixed brackets 260. The axle 250 has a first radially-oriented arm 270 connected to the attachment point 220 of the grate movable plate 160 via pivotable links 280. The axle 250 also has a second radial arm pivotably attached or coupled to a grate control rod 300 extending along the length of the elongate member 20.

With additional reference to Figure 4, the other end of the concave control rod 300 is attached or coupled to a concave control arm 310. In particular, the concave control arm 310 is attached to the concave control rod 300 at a first end 310a of the arm 310. The concave control arm 310 is rotatable about a pivot point at a second end 310b of the control arm 310. The pivot axis of the pivot point 310b is perpendicular to the longitudinal axis of the positioning apparatus 17, i.e. perpendicular to the axis along which the elongate member 20 extends. Also attached to the first end 310a of the control arm 310 is a grate actuating mechanism 320. The grate actuating mechanism 320 includes a grate actuator 330. In the described embodiment, the grate actuator 330 is a hydraulic cylinder (containing hydraulic fluid) with an associated actuating piston which moves in dependence on the hydraulic pressure. That is, the pressure in the hydraulic cylinder dictates the level of force that the grate actuator 330 applies to the grate control arm 310.

With continuing reference to Figure 4, there is also attached to the first end 310a of the grate control arm 310 a grate compression spring 340, which provides a biasing force against the actuating mechanism 320, i.e. in the opposite direction to the force applied by the actuating rod of the grate actuator 330 to the control arm 310. The grate spring 340 may be considered to act in the same direction as gravity and crops applying pressure to the grates 6b. When the spring biasing force completely overcomes the force applied on the control arm 310 by the actuating mechanism 320 then the control arm 310 pivots about its pivot axis 310b. As viewed in Figure 4, this causes the grate control rod 300 to move to the right which in turn causes the grate axles 250 to rotate. The attachment points 220 therefore move downwards which in turn causes the grate movable plate 160 to move downwards. When attached to the separation grates 6b, this means that the grates 6b move downwards to increase the separation gap between the grates 6b and rotors 5 to attain the maximum possible value.

In contrast, when the force applied on the control arm 310 by the actuating mechanism 320 completely overcomes the biasing force of the grate spring 340 then the control arm 310 pivots such that the control rod 300 moves to the left. In turn, this causes the grate axles 250 to rotate such that grate movable plate 160 moves upwards. When attached to the separation grates 6b, grates 6b, this means that the grates 6b move upwards to decrease the separation gap to be the minimum possible value.

Therefore, it will be understood that the pressure in the hydraulic cylinder 330 dictates the size of the separation gap in the combine. In particular, the hydraulic cylinder pressure is controlled by pressure control means 350. In the described embodiment the pressure control means is in the form of an accumulator.

When the pressure control means 350 controls the pressure in the hydraulic cylinder 330 to be a relatively low value, the actuating rod of the grate actuator is in a retracted position. As the pressure in the hydraulic cylinder 330 is increased, the actuating rod extends from the hydraulic cylinder 330 to increase the force it applies to the control arm 310 in opposition to the biasing force of the spring 340. This causes the control arm to rotate about the pivot axis 310b (in an anticlockwise direction as viewed in Figure 4). In turn, this causes the control rod 300 to the right, or in the positive X direction, as viewed in Figure 4. This causes the rotatable axles or linkages 250 to rotate about their axes (again anticlockwise as viewed in Figure 4) and to move the first radially-oriented arms 270 and the pivotable links 280 generally upwards. In turn, this causes the grate divider 160 to move upwards in the vertical or Y direction as viewed in Figure 4, which causes the grates 6b to move upwards so as to reduce the separation gap.

The position of the concaves 6a and grates 6b, and therefore the size of the threshing and separation gaps, may be controlled from the driver's cabin 7. That is, the driver may set the pressure in the hydraulic cylinders 33, 330 so as to pre-set an initial position of the concaves 6a and grates 6b. Crucially, the position of the concaves 6a may be set independently of the position of the grates 6b.

Two different strategies may be followed: the positions of the concaves 6a and grates 6b, and therefore the threshing and separation gaps, may be kept constant during operation of the combine; or, the positions of the concaves 6a and grates 6b may be adaptively adjusted in dependence on the force applied on the concaves 6a and grates 6b by crops being processed by the combine. In the second of these strategies, a level of suspension is built into the combine so as to more effective process crops that pass therethrough. In particular, the combination of the hydraulic cylinders 33, 330 and the accumulators 35, 350 keeps the pressure in the arrangement quasi-constant. By this is meant that an increase in pressure applied by crops to the concaves 6a or grates 6b causes hydraulic fluid to be released from the cylinders 33, 330 to reduce the pressure applied on the control arms 31, 310 by the actuating mechanisms 32, 320, thereby causing the concaves 6a or grates 6b to move downwards to increase the threshing or separation gaps. However, when the pressure applied by crops to the concaves 6a or grates 6b reduces again there is an increase in the hydraulic cylinder pressure so as to return the concaves 6a or grates 6b to their initial or pre-set positions (as set from the driver's cabin 7, for example).

Figures 3a and 3b show that the concave hydraulic cylinder 33 is arranged generally above the grate hydraulic cylinder 330. In addition, the concave and grate hydraulic cylinders 33, 330 extend generally in the same plane, namely, a longitudinal direction of the positioning apparatus 17, i.e. the X direction indicated in the figures. That is, the cylinders 33, 330 are arranged generally in a vertical plane of the apparatus 17. The cylinders are, however, oriented in substantially opposing directions such that an increase in hydraulic pressure in the cylinders 33, 330 causes the respective pistons to move in opposing directions.

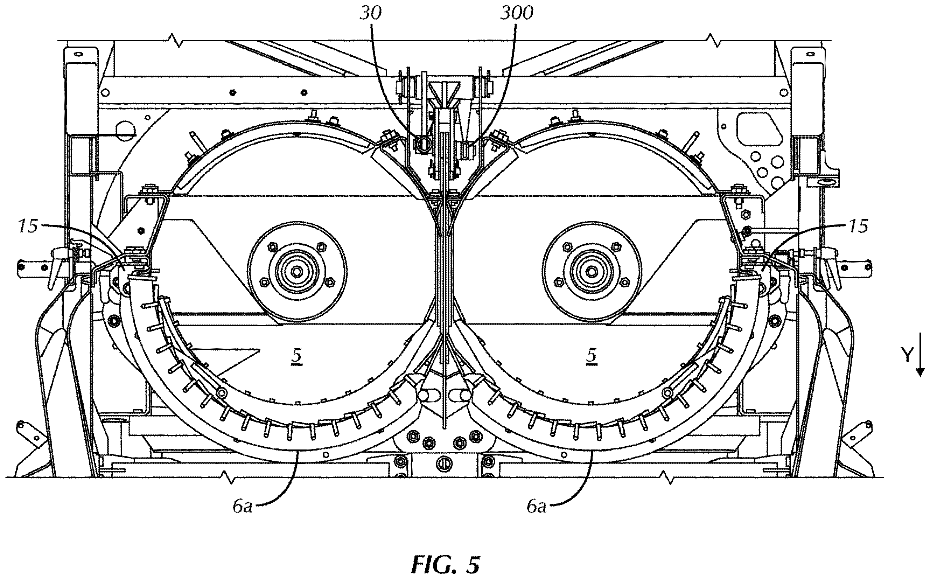

With further reference to Figure 5, which shows an end view of the rotors 5, concaves 6a, and positional apparatus 17, the concave control rod 30 is arranged adjacent to the grate control rod 300, in particular substantially side-by-side. The control rods 30, 300 extend substantially parallel to one another, in particular along the longitudinal axis of the positional apparatus 17.

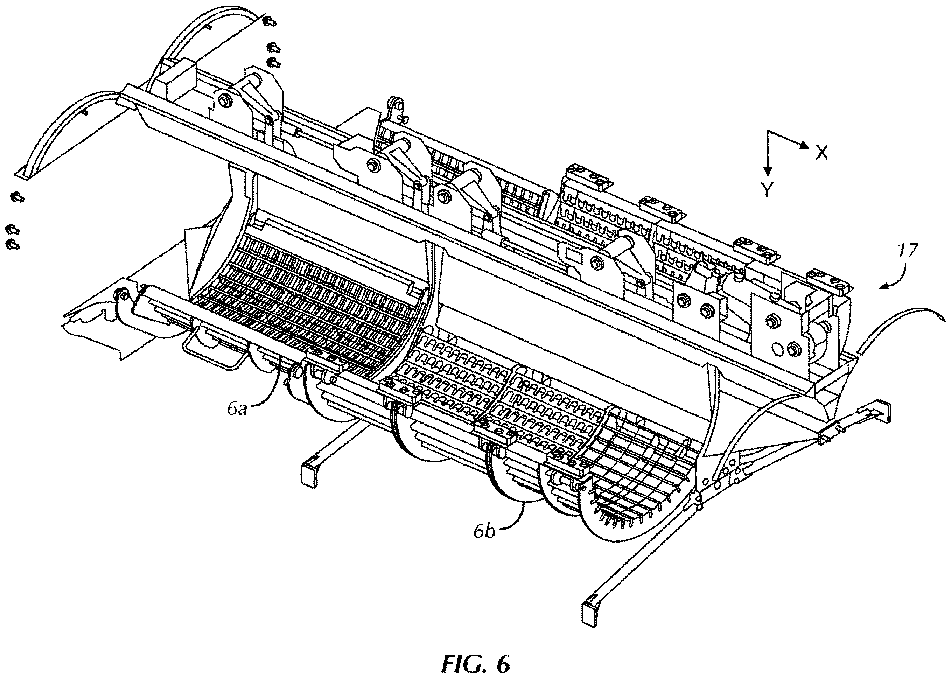

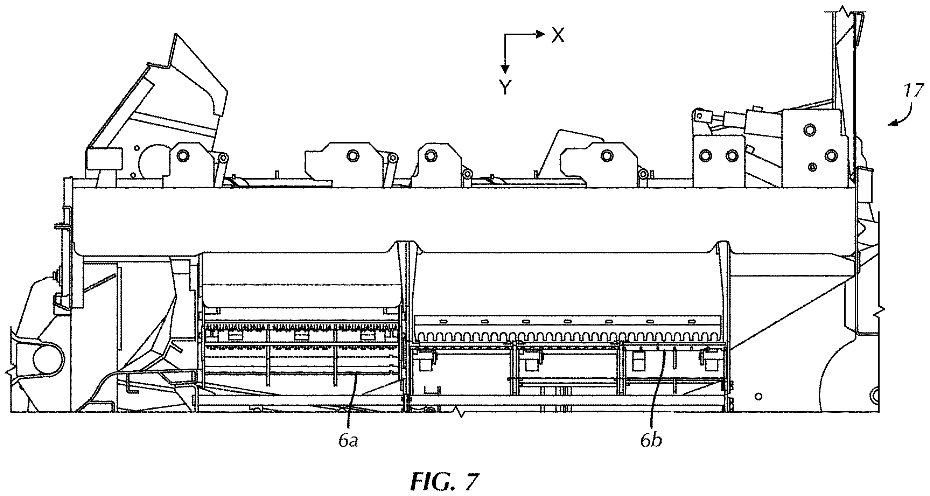

Figures 6 and 7 show additional views of the threshing concaves 6a and separation grates 6b together with the positional apparatus 17. In particular, these figures highlight that the available space between the pair of concaves 6a and between the pair of grates 6b is relatively narrow. The particular design of the positional apparatus 17 is such that the concaves 6a and grates 6b have independent adjustment mechanisms but the positional apparatus 17 remains narrow enough to fit in the limited available space between the concaves 6a and grates 6b (and also below a grain bin of the combine).

Many modifications may be made to the above-described embodiments without departing from the scope of the present invention as defined in the accompanying claims.

In the above described embodiment, the combine is a twin-rotor combine; however, in different embodiments the positional apparatus may be used in a combine having a single rotor, oriented either longitudinally or transversely.

In the above-described embodiment, both the initial positioning of the concaves and grates, and the suspension of the concaves and grates reacting to crop loading thereon, is controlled hydraulically. In different embodiments, only the suspension may be controlled hydraulically and the initial positioning may be controlled by an electric motor, for example.

In the above-described embodiment, the combine includes a single pair of threshing concaves 6a and a single pair of separation grates 6b; however, in different embodiments the combine may include any suitable number of pairs of concaves and any suitable number of pairs of grates.

In the above-described embodiment, the pressure control means is an accumulator; however, in different embodiments the pressure control means may be a dedicated pressure control valve which allows an increase or decrease in pressure in the hydraulic cylinders in dependence on the crop pressure applied to the threshing concaves and separation grates.

## Claims

1. A positioning apparatus (17) for a rotary combine harvester (100) having a threshing concave (6a) and a separation grate (6b), the positioning apparatus (17) comprising:
an elongate member (20) defining a longitudinal direction (X) of the positioning apparatus (17);
a concave adjustor comprising:
a concave movable plate (16) attachable to the threshing concave (6a) and being movable in a vertical direction (Y) perpendicular to the longitudinal direction (X);
a concave control arm (31) mounted on the elongate member (20) and being pivotable relative to the elongate member (20) about a pivot axis (31c) perpendicular to the longitudinal direction (X) and the vertical direction (Y), wherein rotation of the concave control arm (31) causes movement of the concave movable plate (16);
a concave control rod (30) coupling the concave movable plate (16) and the concave control arm (31); and,
a concave actuator (33) including a concave hydraulic cylinder having an adjustable hydraulic pressure to cause rotation of the concave control arm (31) so as to control a position of the threshing concave (6a),
a grate adjustor comprising:
a grate movable plate (160) attachable to the separation grate (6b) and being movable in the vertical direction (Y);
a grate control arm (310) mounted on the elongate member (20) and being pivotable relative to the elongate member (20) about a pivot axis (310b) perpendicular to the longitudinal direction (X) and the vertical direction (Y), wherein rotation of the grate control arm (310) causes movement of the grate movable plate (160);
a grate control rod (300) coupling the grate movable plate (160) and the grate control arm (310); and,
a grate actuator (330) including a grate hydraulic cylinder having an adjustable hydraulic pressure to cause rotation of the grate control arm (310) so as to control a position of the separation grate (6b),
wherein the concave hydraulic cylinder and the grate hydraulic cylinder both extend in the longitudinal direction (X).

2. A positioning apparatus (17) according to Claim 1, wherein the concave hydraulic cylinder and the grate hydraulic cylinder extend in a substantially common vertical plane of the positioning apparatus (17).

3. A positioning apparatus (17) according to Claim 1 or Claim 2, wherein the concave hydraulic cylinder (33) is positioned above the grate hydraulic cylinder (330) in the vertical direction (Y).

4. A positioning apparatus (17) according to any previous claim, wherein the concave control rod (30) is adjacent to the grate control rod (300).

5. A positioning apparatus (17) according to Claim 4, wherein the concave control rod (30) extends substantially parallel to the grate control rod (300).

6. A positioning apparatus (17) according to Claim 5, wherein the concave control rod (30) and the grate control rod (300) extend in the longitudinal direction (X).

7. A positioning apparatus (17) according to any previous claim, wherein the concave actuator (33) is configured to cause rotation of the concave control arm (31) against a concave biasing force, and wherein the grate actuator (330) is configured to cause rotation of the grate control arm (310) against a grate biasing force.

8. A positioning apparatus (17) according to Claim 7, the concave adjustor comprising a concave spring (34) and the grate adjustor comprising a grate spring (340), wherein the concave spring (34) provides the concave biasing force against the concave actuator (33), and wherein the grate spring (340) provides the grate biasing force against the grate actuator (330).

9. A rotary combine harvester (100) comprising:
first and second rotors (5);
first and second threshing concaves (6a) extending under and about at least part of a threshing portion of the respective first and second rotors (5) and defining a threshing gap therebetween;
first and second separation grates (6b) extending under and about at least part of a separation portion of the respective first and second rotors (5) and defining a separation gap therebetween; and,
a positioning apparatus (17) according to any of Claims 1 to 8.

10. A rotary combine harvester (100) according to Claim 9, wherein the positioning apparatus (17) is arranged centrally relative to the first and second rotors (5).

11. A rotary combine harvester (100) according to Claim 9 or Claim 10, wherein the positioning apparatus (17) is arranged above the first and second rotors in the vertical direction (Y).

12. A rotary combine harvester (100) according to any of Claims 9 to 11,
the first and second threshing concaves (6a) each comprising:
a fixed outer concave edge (15) at an outer side of the respective first and second rotors (5); and,
a movable inner concave edge at an inner side of the respective first and second rotors (5),
wherein actuation of the concave actuator (33) causes movement of the movable inner concave edges so as to adjust the threshing gap, and
the first and second separation grates (6b) each comprising:
a fixed outer grate edge at an outer side of the respective first and second rotors; and,
a movable inner grate edge at an inner side of the respective first and second rotors,
wherein actuation of the grate actuator (330) causes movement of the movable inner grate edges so as to adjust the separation gap.

13. A rotary combine harvester (100) according to any of Claims 9 to 12, wherein:
the concave actuator (33) and the grate actuator (330) each comprise a hydraulic cylinder;
the concave actuator (33) and the grate actuator (330) each comprise pressure control means (35, 350) configured to control the hydraulic pressure in the respective hydraulic cylinders (33, 330); and,
the pressure control means (35, 350) is configured to set the hydraulic pressure in the respective hydraulic cylinders (33, 330) to a predetermined value so as to adjust the threshing and separation gaps to desired values.

14. A rotary combine harvester (100) according to Claim 13, wherein the pressure control means (35, 350) is configured to adaptively control the pressure in the hydraulic cylinders (33, 330) to return to the respective predetermined values so as to maintain the threshing and separation gaps at the desired values.

15. A rotary combine harvester (100) according to Claim 14, wherein the threshing concaves (6a) and the separation grates (6b) are configured to move relative to the first and second rotors (5) to increase the respective threshing and separation gaps upon increased pressure being applied to the threshing concaves (6a) and separation grates (6b) by causing a change in the pressure in the hydraulic cylinders (33, 330).

16. A rotary combine harvester (100) comprising:
first and second rotors (5);
first and second threshing concaves (6a) extending under and about at least part of a threshing portion of the respective first and second rotors (5) and defining a threshing gap therebetween;
first and second separation grates (6b) extending under and about at least part of a separation portion of the respective first and second rotors (5) and defining a separation gap therebetween; and,
a positioning apparatus (17) comprising a concave actuator (33) and a grate actuator (330) for respectively adjusting the threshing gap and the separation gap,
wherein the positioning apparatus (17) is arranged centrally relative to the first and second rotors (5).

17. A rotary combine harvester (100) according to Claim 16, wherein the positioning apparatus (17) is arranged above the first and second rotors in a vertical direction (Y) of the rotary combine harvester (100).

18. A rotary combine harvester (100) according to Claim 16 or Claim 17, wherein:
the concave actuator (33) and the grate actuator (330) each comprise a hydraulic cylinder;
the concave actuator (33) and the grate actuator (330) each comprise pressure control means (35, 350) configured to control the hydraulic pressure in the respective hydraulic cylinders (33, 330); and,
the pressure control means (35, 350) is configured to set the hydraulic pressure in the respective hydraulic cylinders (33, 330) to a predetermined value so as to adjust the threshing and separation gaps to desired values.

19. A rotary combine harvester (100) according to Claim 18, wherein the pressure control means (35, 350) is configured to adaptively control the pressure in the hydraulic cylinders (33, 330) to return to the respective predetermined values so as to maintain the threshing and separation gaps at the desired values.

20. A rotary combine harvester (100) according to Claim 19, wherein the threshing concaves (6a) and the separation grates (6b) are configured to move relative to the first and second rotors (5) to increase the respective threshing and separation gaps upon increased pressure being applied to the threshing concaves (6a) and separation grates (6b) by causing a change in the pressure in the hydraulic cylinders (33, 330).
